# FASCICULE DE BREVET EUROPEEN

(11) **EP 1 923 971 B1**
(45) Date de publication et mention de la délivrance du brevet: **07.10.2009**
(21) Numéro de dépôt: 07120471.3
(22) Date de dépôt: 12.11.2007
(51) Int. Cl.: H01S 3/091

(54) **Amplificateur Laser à Plusieurs Sous-Ensembles de Dispositifs de Pompage**
Laserverstärker mit mehreren Pumpvorrichtungsuntergruppen
Laser amplifier with several pumping device subassemblies

(30) Priorité: 17.11.2006 FR 0610072
(43) Date de publication de la demande: 21.05.2008
(73) Titulaire: ASTRIUM SAS, 75016 Paris (FR)
(72) Inventeur: Mazuray, Laurent, Henri, Claude, 31600, MURET (FR); Fruit, Michel, Bernard, Patrick, 31650, LAUZERVILLE (FR)
(74) Mandataire: Cabinet Plasseraud

(56) Documents cités:
- EP-A2- 0 814 550
- JP-A- 2 130 976
- US-A1- 2005 135 452

## Description

La présente invention concerne un amplificateur laser qui comprend plusieurs dispositifs de pompage d'un milieu amplificateur.

De façon connue, un amplificateur laser comprend un milieu amplificateur qui est adapté pour être traversé par un faisceau laser destiné à être amplifié. Des dispositifs de pompage sont disposés à l'extérieur du milieu amplificateur pour pomper ce dernier. On entend par pompage du milieu amplificateur la création ou l'entretien d'une inversion de population dans celui-ci. Cette inversion de population engendre alors l'amplification du faisceau laser.

Les dispositifs de pompage peuvent être constitués de diodes, qui peuvent être éventuellement elles-mêmes du type diodes-laser. Or de tels dispositifs de pompage ont une durée de fonctionnement, ou durée de vie, qui est limitée. Autrement dit, après une certaine durée de fonctionnement, les dispositifs de pompage sont moins efficaces. L'inversion de population qu'ils créent dans le milieu amplificateur est alors moins grande, et l'amplification du faisceau laser est réduite en conséquence. Finalement, il n'y a plus d'amplification lorsque les dispositifs de pompage ne sont plus efficaces après une durée de fonctionnement trop longue.

Lorsque l'amplificateur laser est embarqué à bord d'un engin spatial, par exemple du type satellite ou sonde d'exploration, pour participer à une mission technique ou scientifique déterminée, la durée de la mission est limitée par la durée de vie des dispositifs de pompage. Eventuellement, la durée de la mission peut être augmentée en prévoyant un fonctionnement intermittent de l'amplificateur laser. Mais un tel fonctionnement intermittent est particulièrement contraignant par rapport à la mission, puisque l'amplificateur laser n'est alors plus disponible continument.

Une autre possibilité consiste à prévoir deux amplificateurs laser à bord de l'engin spatial, afin qu'un premier amplificateur laser soit d'abord utilisé, puis un second amplificateur en relais au premier lorsque les dispositifs de pompage du premier amplificateur ne fonctionnent plus de façon satisfaisante. Mais une telle redondance augmente la masse de l'engin spatial, d'une façon pénalisante par rapport au procédé de lancement de l'engin. En outre, l'agencement des deux amplificateurs laser à bord de l'engin pour substituer d'une façon équivalente le second amplificateur au premier peut être complexe.

Enfin, le document EP 0 814 550 décrit un amplificateur laser dans lequel les dispositifs de pompage sont répartis en plusieurs sous-ensembles qui sont activés alternativement, cycliquement ou successivement. Un fonctionnement de l'amplificateur peut alors être obtenu pendant une durée qui correspond à la durée de vie des dispositifs de pompage, multipliée par le nombre de sous-ensembles de ceux-ci. Néanmoins, dans un tel amplificateur, la redondance est limitée aux dispositifs de pompage, et un unique milieu amplificateur est prévu. Or, la substitution de l'un des sous-ensembles de dispositifs de pompage par un autre sous-ensemble provoque, de façon générale, des variations dans la forme du faisceau laser amplifié et/ou des instabilités dans la localisation du barycentre énergétique du faisceau laser amplifié. Dans le cadre de la présente invention, on entend par barycentre énergétique du faisceau la position d'un centre de répartition de l'énergie du faisceau dans une section transversale de celui-ci, pour une caractérisation en champ proche. Mais on comprend aussi dans cette appellation l'orientation du faisceau laser à la sortie de l'amplificateur pour une caractérisation en champ lointain. En effet, l'orientation du faisceau laser est définie par les positions successives du centre de répartition de l'énergie dans des sections du faisceau décalées le long du trajet de celui-ci.

Un but de la présente invention consiste donc à proposer un amplificateur laser qui présente une durée de fonctionnement augmentée par rapport à la durée de vie des dispositifs de pompage utilisés, et qui ne présente pas les inconvénients cités ci-dessus.

L'invention est définit dans la revendication 1 qui propose un amplificateur laser qui comprend :
- un milieu amplificateur qui est limité par au moins deux faces latérales et qui est adapté pour être traversé selon un trajet déterminé par un faisceau laser à amplifier. Ce trajet comprend des points successifs de réflexion du faisceau laser qui sont situés sur une puis sur une autre des faces latérales du milieu amplificateur ; et
- un ensemble de dispositifs de pompage qui sont disposés à l'extérieur du milieu amplificateur, au droit de certains au moins des points de réflexion du faisceau laser par rapport aux faces correspondantes, pour pomper le milieu amplificateur dans des zones situées autour des points de réflexion.

L'ensemble de dispositifs de pompage est divisé en au moins deux sous-ensembles qui sont séparés les uns des autres. En outre, chaque sous-ensemble comprend au moins une paire de dispositifs de pompage qui sont situés respectivement au droit de deux points de réflexion successifs le long du trajet du faisceau laser dans le milieu amplificateur.

L'amplificateur laser de l'invention comprend en outre un système d'alimentation électrique et de commande qui est agencé de façon à activer simultanément les dispositifs de pompage d'un premier des sous-ensembles de ceux-ci, puis les dispositifs de pompage d'un second des sous-ensembles de dispositifs de pompage différent du premier sous-ensemble, les dispositifs de pompage d'un seul sous-ensemble étant activés en même temps.

Un amplificateur laser selon l'invention ne comporte donc qu'une redondance de dispositifs de pompage. En effet, un unique et même milieu amplificateur est utilisé avec chaque sous-ensemble de dispositifs de pompage.

En outre, étant donné que les différents sous-ensembles de dispositifs de pompage sont séparés et activés séquentiellement, une durée totale de fonctionnement de l'amplificateur est obtenue, qui correspond à la durée de vie d'un dispositif de pompage multipliée par le nombre de sous-ensembles de ceux-ci.

Par ailleurs, la forme du faisceau laser amplifié ne varie pas lors d'une transition entre une activation des dispositifs de pompage de l'un des sous-ensembles à celle des dispositifs d'un autre sous-ensemble. En effet, la disposition des dispositifs de pompage au droit des points de réflexion du faisceau laser à l'intérieur du milieu amplificateur garantit une amplification symétrique par rapport à un rayon paraxial, ou rayon central, du faisceau laser. Cet agencement particulier des dispositifs de pompage par rapport aux points de réflexion du faisceau laser constitue une première caractéristique de l'invention. Il procure une bonne stabilité de la forme du faisceau amplifié.

Une seconde caractéristique de l'invention réside dans la sélection des dispositifs de pompage qui sont activés simultanément. En effet, selon l'invention, les dispositifs de pompage qui sont activés simultanément sont sélectionnés par paires de dispositifs successifs le long du trajet du faisceau laser dans le milieu amplificateur. Ainsi, les deux dispositifs de pompage d'une même paire sont situés au droit de deux points de réflexion du faisceau laser qui sont successifs et situés respectivement sur deux des faces latérales du milieu amplificateur. Lorsque ces deux dispositifs de pompage sont activés simultanément, ils engendrent des gradients de température dans le milieu amplificateur qui se compensent partiellement. Le faisceau laser est alors peu dévié au sein du milieu amplificateur par les variations de température qui sont générées dans celui-ci par les dispositifs de pompage. Il en résulte que le barycentre énergétique du faisceau laser amplifié possède une localisation particulièrement stable lors d'une transition de fonctionnement entre deux sous-ensembles de dispositifs de pompage.

Selon différents modes de réalisation de l'invention, l'amplificateur laser peut comprendre deux, trois ou quatre sous-ensembles de dispositifs de pompage qui sont activés simultanément lorsqu'ils appartiennent à un même sous-ensemble, et à des instants différents lorsqu'ils appartiennent à des sous-ensembles différents. La durée totale de fonctionnement de l'amplificateur est alors égale à deux, trois ou quatre fois la durée de vie d'un dispositif de pompage, selon le cas.

L'invention propose aussi un engin spatial qui comprend un amplificateur laser tel que décrit précédemment, et qui est embarqué à bord de cet engin. Grâce à la redondance des dispositifs de pompage, l'engin peut avoir une mission plus longue que la durée de vie des dispositifs de pompage. En outre, l'utilisation d'un unique milieu amplificateur contribue à réduire la masse de l'engin, et donc son coût de lancement vers l'espace. L'amplificateur laser peut être utilisé à bord de l'engin spatial pour de nombreuses applications, telles que des applications de guidage par laser, notamment du type LADAR pour «laser-radar», des applications de détection, notamment du type LIDAR pour «light-radar», des applications de télémétrie, de communications optiques, etc.

Par ailleurs, grâce à la disposition des dispositifs de pompage selon l'invention, aucun ajustement de ceux-ci n'est nécessaire en cours de mission pour obtenir un faisceau laser amplifié qui soit stable quant à sa forme et son barycentre énergétique.

L'invention propose encore un procédé d'amplification d'un faisceau laser qui utilise un amplificateur laser tel que décrit précédemment. Un tel procédé est particulièrement adapté, notamment, pour être mis en oeuvre à bord d'un engin spatial.

D'autres particularités et avantages de la présente invention apparaîtront dans la description ci-après d'exemples de réalisation non limitatifs, en référence aux dessins annexés, dans lesquels :
- la figure 1 illustre schématiquement un mode de réalisation possible de l'invention; et
- la figure 2 illustre un fonctionnement par impulsions d'un amplificateur laser conforme à la figure 1.

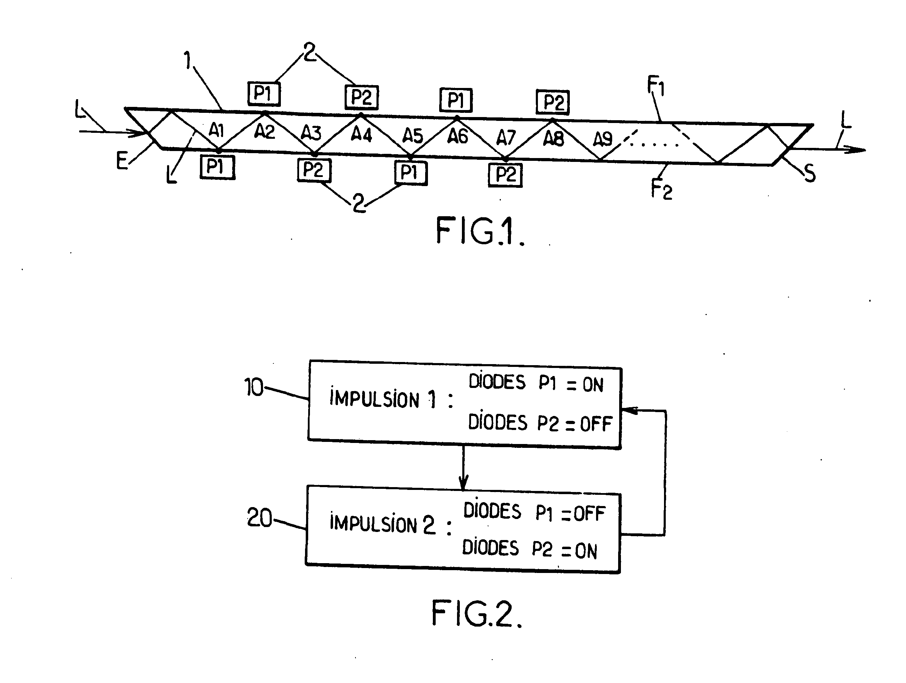

Pour raison de clarté, les parties des différents éléments représentés sur la figure 1 ne sont pas en proportion avec des dimensions ni des rapports de dimensions réels.

Conformément à la figure 1, un amplificateur laser comprend un milieu amplificateur 1, qui peut être de la forme d'un barreau de section carrée ou rectangulaire. Il présente deux faces latérales opposées, parallèles et planes, notées F₁ et F₂, qui relient une face d'entrée et une face de sortie, notées E et S. Le barreau est rectiligne et les faces E et S sont inclinées par rapport à la direction longitudinale du barreau. La figure 1 correspond à un plan de section du barreau qui est confondu avec un plan de symétrie de celui-ci, orthogonal aux faces E, S, F₁ et F₂. Le milieu 1 est constitué d'un matériau cristallin qui est transparent pour un faisceau laser L traversant celui-ci. Ce matériau peut en outre développer une inversion de population entre deux niveaux électroniques correspondant à une émission induite de rayonnement à la longueur d'onde du faisceau L.

Les inclinaisons des faces E et S sont déterminées d'après les lois de Descartes de réfraction pour ajuster un angle de propagation du faisceau laser L dans le milieu amplificateur. Le faisceau L pénètre alors dans le milieu 1 par la face E, se réfléchit alternativement sur les faces F₁ et F₂, puis ressort par la face S. Pour réduire les pertes d'intensité du faisceau L à chaque réflexion sur les faces F₁ et F₂, les inclinaisons des faces E et S sont déterminées de sorte que les réflexions du faisceau L sur les faces F₁ et F₂ sont des réflexions totales. Le faisceau L décrit alors un trajet déterminé à l'intérieur du milieu 1, entre les faces E et S, qui est formé de segments obliques sensiblement rectilignes entre des points de réflexion successifs, notés, A₁, A₂, A₃, ... Les points A₁, A₂, A₃, ... sont alternativement situés sur les faces F₁ et F₂. Le nombre de points de réflexion dépend de la longueur du milieu 1 entre les faces E et S. Il peut être inférieur, supérieur ou égal à 10, par exemple.

On dispose alors un ensemble de dispositifs de pompage du milieu amplificateur, référencés 2, à l'extérieur du milieu amplificateur 1 et au droit des points de réflexion A₁, A₂, A₃, ..., par rapport aux faces F₁ et F₂. Les dispositifs 2 sont de préférence identiques entre eux, et peuvent être de l'un des types suivants : diodes, diodes laser, barrettes de diodes, barrettes de diodes laser, ensembles de diodes, ensemble de diodes laser, etc., disponibles commercialement. Chacun des dispositifs 2 ainsi disposé réalise un pompage du milieu amplificateur 1 dans une zone qui est située autour du point de réflexion correspondant. Grâce à une telle disposition, la zone de pompage qui est créée par chaque dispositif 2 à l'intérieur du milieu 1, est symétrique par rapport à un plan de section transversal qui est perpendiculaire à la direction longitudinale du milieu 1 et qui contient le point de réflexion correspondant à ce dispositif de pompage. Dans ces conditions, le faisceau L est amplifié lorsqu'il traverse la zone de pompage, en se réfléchissant sur la face F₁ ou F₂, sans que la forme du faisceau soit modifiée. Le faisceau laser L possède alors une forme, après avoir été amplifié et être ressorti du milieu 1 par la face S, qui est identique à celle qu'il présente avant de pénétrer dans le milieu 1 par la face E.

On connecte ensuite les dispositifs de pompage 2 à un système d'alimentation électrique et de commande (non représenté), en les séparant en au moins deux sous-ensembles. Sur la figure 1, un premier sous-ensemble contient les dispositifs de pompage notés P1, et un second sous-ensemble contient les dispositifs de pompage notés P2. Les sous-ensembles P1 et P2 sont différents. Les dispositifs de pompage 2 sont séparés de sorte que chaque sous-ensemble comprend au moins une paire de dispositifs 2 qui sont situés respectivement au droit de deux points de réflexion successifs le long du trajet du faisceau laser L dans le milieu 1. Ainsi, le sous-ensemble de dispositifs P1 contient la paire de dispositifs 2 qui sont situés respectivement au droit des points de réflexion A₁ et A₂, celle des dispositifs 2 qui sont situés respectivement au droit des points de réflexion A₅ et A₆, etc. De la même façon, le sous-ensemble de dispositifs P2 contient la paire de dispositifs 2 qui sont situés respectivement au droit des points de réflexion A₃ et A₄, celle des dispositifs 2 qui sont situés respectivement au droit des points de réflexion A₇ et A₈, etc.

On active alors, au moyen du système d'alimentation électrique et de commande, simultanément les dispositifs de pompage 2 du sous-ensemble P1, puis ceux du sous-ensemble P2. Pour cela, les connexions électriques peuvent relier le système d'alimentation électrique et de commande à des dispositifs 2 qui appartiennent à un même sous-ensemble selon un montage en série, et des dispositifs 2 qui appartiennent à des sous-ensembles différents selon un montage en parallèle. D'autres schémas électriques de connexion peuvent être utilisés alternativement, qui peuvent être déterminés facilement par l'Homme du métier en fonction de la nature du système d'alimentation et de commande utilisé, de la puissance électrique qui est consommée par chaque dispositif de pompage 2, etc.

Chaque dispositif de pompage 2, pendant son fonctionnement, engendre un échauffement local du milieu 1 dans la zone de pompage correspondante. Il en résulte l'apparition d'un gradient de température à l'intérieur du milieu 1, autour de la limite de la zone de pompage. Lorsque deux dispositifs 2 sont activés en même temps, alors qu'ils sont situés successivement le long du trajet du faisceau L, les gradients de température qui apparaissent aux limites des deux zones de pompage correspondantes se compensent partiellement sur le segment de trajet qui relie les deux points de réflexion du faisceau. Or, des gradients de température qui sont présents à l'intérieur du milieu 1 sont susceptibles de déplacer le barycentre énergétique du faisceau L. Par conséquent, grâce à la sélection des dispositifs 2 de chaque sous-ensemble P1 ou P2 par paire de dispositifs 2 successifs, le barycentre énergétique du faisceau L est stabilisé, au moins en partie, entre une période d'activation des dispositifs du sous-ensemble P1 et une période d'activation des dispositifs du sous-ensemble P2.

Plusieurs types de fonctionnement d'un tel amplificateur laser peuvent être mis en oeuvre, en fonction du mode de commande de celui-ci.

Selon un premier type de fonctionnement, on active d'abord les dispositifs de pompage de l'un des sous-ensembles, par exemple P1, pendant une première période de fonctionnement de l'amplificateur. Cette première période est prolongée jusqu'à atteindre un niveau déterminé d'épuisement des dispositifs de pompage P1, puis on active ensuite les dispositifs de pompage de l'autre sous-ensemble, P2, pendant une seconde période de fonctionnement de l'amplificateur. Ainsi, pendant la première période de fonctionnement, à intervalles réguliers ou après une durée déterminée, on détermine le niveau d'épuisement des dispositifs de pompage 2 du sous-ensemble P1, on compare ce niveau d'épuisement à un seuil et, si le niveau d'épuisement a atteint le seuil, on active les dispositifs de pompage P2. Le seuil d'épuisement des dispositifs de pompage 2 du sous-ensemble P1 peut être déterminé de plusieurs façons. Notamment, il peut être fixé initialement par le constructeur des dispositifs 2, ou être déterminé en mesurant le facteur d'amplification du faisceau L. Dans le premier cas, le constructeur peut fixer une durée de fonctionnement au-delà de laquelle l'épuisement des dispositifs est supposé atteint. Dans le second cas, le seuil d'épuisement des dispositifs 2 du sous-ensemble P1 est atteint lorsque le facteur d'amplification du faisceau L a diminué jusqu'à une limite inférieure fixée. La durée totale de fonctionnement de l'amplificateur est alors égale à la somme des durées d'activation de chaque sous-ensemble de dispositifs de pompage.

Un tel fonctionnement peut être combiné à un fonctionnement continu de l'amplificateur, ou à un fonctionnement de celui-ci par impulsions. Dans ce dernier cas, des impulsions successives de rayonnement laser sont émises pendant chaque période de fonctionnement correspondant à l'activation des dispositifs de pompage appartenant à l'un des sous-ensembles.

Selon un second type de fonctionnement, l'amplificateur laser peut être adapté pour émettre des impulsions successives de rayonnement laser en activant alternativement les dispositifs de pompage 2 du sous-ensemble P1 ou ceux du second sous-ensemble P2, et en changeant à chaque impulsion émise. Un tel type de fonctionnement est illustré par la figure 2, pour des dispositifs 2 constitués de diodes. Chaque sous-ensemble de dispositifs de pompage n'est activé que toutes les deux impulsions, selon une fréquence qui est égale à la moitié de celle des impulsions produites en sortie de l'amplificateur. Par exemple, seuls les dispositifs P1 sont activés pour amplifier une première impulsion laser (étape 10), alors que l'impulsion suivante est amplifiée par les dispositifs P2 (étape 20). La durée de fonctionnement de l'amplificateur est alors multipliée par deux, par rapport à un fonctionnement selon lequel tous les dispositifs de pompage 2 sont activés à chaque impulsion.

Ainsi, dans les deux types de fonctionnement de l'amplificateur qui viennent d'être cités, une durée de fonctionnement de l'amplificateur est obtenue, qui est augmentée alors que seuls les dispositifs de pompage 2 ont été dupliqués. En outre, l'invention procure un agencement géométrique et électrique des dispositifs de pompage dupliqués qui est simple, et qui ne nécessite pas de dupliquer le milieu amplificateur 1. De plus, aucun ajustement optique ni géométrique n'est nécessaire pendant le fonctionnement de l'amplificateur, pour passer d'un sous-ensemble des dispositifs 2 à un autre sous-ensemble en conservant des caractéristiques stables du faisceau laser amplifié.

Il est entendu que l'invention peut être mise en oeuvre tout en introduisant des modifications par rapport aux exemples qui ont été décrits en détail ci-dessus. En particulier, les caractéristiques suivantes peuvent être variées :
- le nombre de sous-ensembles de dispositifs de pompage : les dispositifs de pompage peuvent être séparés en un nombre quelconque de sous-ensembles qui sont chacun activés successivement, alternativement ou cycliquement ;
- le nombre de paires de dispositifs de pompage par sous-ensemble : le facteur d'amplification, en logarithme, est égal à la somme des facteurs d'amplification qui sont respectivement associés à chaque paire de dispositifs de pompage dans un sous-ensemble ; et
- la disposition des paires de dispositifs de pompage qui appartiennent de chaque sous-ensemble, le long du trajet du faisceau laser dans le milieu amplificateur : les paires appartenant à des sous-ensembles différents peuvent être alternées sur la longueur du barreau, ou regroupées de façon quelconque pour un même sous-ensemble. Par exemple le sous-ensemble P1 peut comprendre les dispositifs 2 qui sont situés au droit des points de réflexion A₁, A₂, A₇ et A₈ de la figure 1. Le sous-ensemble P2 contient alors les dispositifs qui sont situés aux points A₃, A₄, A₅ et A₆.

## Revendications

1. Amplificateur laser comprenant :
- un milieu amplificateur (1) limité par au moins deux faces latérales (F1, F2) et adapté pour être traversé selon un trajet déterminé par un faisceau laser (L) destiné à être amplifié, ledit trajet comprenant des points successifs de réflexion du faisceau laser (A₁, A₂, A₃,.,.) situés sur l'une puis sur l'autre des dites faces latérales dudit milieu amplificateur ;
- un ensemble de dispositifs de pompage (2) disposés à l'extérieur du milieu amplificateur, au droit de certains au moins des points de réflexion du faisceau laser (A₁, A₂, A₃,...) par rapport aux faces correspondantes (F1, F2), pour pomper le milieu amplificateur (1) dans des zones situées autour desdits points de réflexion, ledit ensemble de dispositifs de pompage étant divisé en au moins deux sous-ensembles (P1, P2) séparés les uns des autres, et chaque sous-ensemble comprenant au moins une paire de dispositifs de pompage (2) situés respectivement au droit de deux points de réflexion successifs (A₁, A₂, A₃, A₄, ...) le long du trajet du faisceau laser (L) dans le milieu amplificateur (1) ; et
- un système d'alimentation électrique et de commande agencé de façon à activer simultanément les dispositifs de pompage (2) d'un premier desdits sous-ensembles de dispositifs de pompage (P1), puis les dispositifs de pompage (2) d'un second desdits sous-ensembles de dispositifs de pompage (P2) différent du premier sous-ensemble, les dispositifs de pompage d'un seul des sous-ensembles étant activés en même temps.

2. Amplificateur laser selon la revendication 1, comprenant deux, trois ou quatre sous-ensembles de dispositifs de pompage (2) activés simultanément pour des dispositifs appartenant à un même sous-ensemble, et activés à des instants différents pour des dispositifs appartenant à des sous-ensembles différents.

3. Amplificateur laser selon la revendication 1 ou 2, dans lequel le système d'alimentation électrique et de commande est adapté pour activer d'abord les dispositifs de pompage (2) de l'un des sous-ensembles (P1) pendant une première période de fonctionnement de l'amplificateur, jusqu'à atteindre un niveau déterminé d'épuisement des dispositifs de pompage dudit sous-ensemble, et pour activer ensuite les dispositifs de pompage (2) d'un autre des sous-ensembles (P2) pendant une seconde période de fonctionnement de l'amplificateur.

4. Amplificateur laser selon la revendication 3, adapté pour émettre des impulsions successives de rayonnement laser pendant chaque période de fonctionnement de l'amplificateur correspondant à l'activation des dispositifs de pompage (2) de l'un des sous-ensembles (P1, P2).

5. Amplificateur laser selon la revendication 1 ou 2, adapté pour émettre des impulsions successives de rayonnement laser, et dans lequel le système d'alimentation électrique et de commande est adapté pour activer alternativement les dispositifs de pompage (2) de chaque sous-ensemble (P1, P2) en changeant de sous-ensemble à chaque impulsion émise.

6. Procédé d'amplification d'un faisceau laser, comprenant les étapes suivantes :
- disposer un milieu amplificateur (1) sur un trajet du faisceau laser (L), ledit milieu étant limité par au moins deux faces latérales (F1, F2), de sorte que le faisceau laser est réfléchi sur une puis sur une autre des faces du milieu amplificateur en des points successifs (A₁, A₂, A₃,...) desdites faces ;
- disposer un ensemble de dispositifs de pompage (2) à l'extérieur dudit milieu amplificateur, au droit de certains au moins des points de réflexion du faisceau laser (A₁, A₂, A₃,...) par rapport aux faces correspondantes (F1, F2), pour pomper le milieu amplificateur (1) dans des zones situées autour desdits points de réflexion ;
- connecter les dispositifs de pompage (2) en séparant lesdits dispositifs en au moins deux sous-ensembles (P1, P2) comprenant chacun au moins une paire de dispositifs de pompage (2) situés respectivement au droit de deux points de réflexion successifs (A₁, A₂, A₃, A₄) le long du trajet du faisceau laser (L) dans le milieu amplificateur (1) ; et
- activer simultanément les dispositifs de pompage (2) d'un premier desdits sous-ensembles de dispositifs (P1, P2), puis les dispositifs de pompage d'un second desdits sous-ensembles de dispositifs différent du premier sous-ensemble.

7. Procédé selon la revendication 6, suivant lequel les dispositifs de pompage (2) sont séparés en deux, trois ou quatre sous-ensembles de dispositifs de pompage (2) activés simultanément pour des dispositifs appartenant à un même sous-ensemble, et activés à des instants différents pour des dispositifs appartenant à des sous-ensembles différents.

8. Procédé selon la revendication 6 ou 7, suivant lequel :
- on active d'abord les dispositifs de pompage (2) du premier sous-ensemble (P1) pendant une première période de fonctionnement ;
- on détermine un niveau d'épuisement des dispositifs de pompage dudit premier sous-ensemble après la première période de fonctionnement ;
- on compare le niveau d'épuisement déterminé à un seuil ; et
- si le niveau d'épuisement a atteint ledit seuil, on active les dispositifs de pompage (2) dudit second sous-ensemble (P2).

9. Procédé selon la revendication 8, suivant lequel les dispositifs de pompage (2) de chaque sous-ensemble (P1, P2) sont activés de façon à émettre des impulsions successives de rayonnement laser pendant chaque période de fonctionnement.

10. Procédé selon la revendication 6 ou 7, suivant lequel les dispositifs de pompage (2) de chaque sous-ensemble (P1, P2) sont activés de façon à émettre des impulsions successives de rayonnement laser, et suivant lequel les dispositifs de pompage de chaque sous-ensemble sont activés alternativement en changeant de sous-ensemble à chaque impulsion émise.

11. Procédé selon l'une quelconque des revendications 6 à 10, mis en oeuvre à bord d'un engin spatial.

## Claims

1. A laser amplifier comprising:
- an amplifying medium (1) bounded by at least two side faces (F1, F2) and adapted to be run through along a predetermined path by a laser beam (L) intended to be amplified, said path comprising successive points for reflection of the laser beam (A₁, A₂, A₃,..) located on one and then on the other one of said side faces of said amplifying medium;
- a set of pumping devices (2) which are arranged outside the amplifying medium above some at least of the reflection points of the laser beam (A₁, A₂, A₃, ...) along a direction perpendicular to the corresponding faces (F1, F2), for pumping the amplifying medium (1) in zones located around said reflection points, said assembly of pumping devices being divided into at least two sub-sets (P1, P2) separated from each other and, each sub-set comprising at least one pair of pumping devices (2) located respectively above two successive reflection points (A₁, A₂, A₃, A₄,...) along the path of the laser beam (L) in the amplifying medium (1); and
- an electrical power supply and control system arranged so as to activate simultaneously the pumping devices (2) of a first one of said sub-sets of pumping devices (P1), then the pumping devices (2) of a second one of said sub-sets of pumping devices (P2) that is different from the first sub-set, the pumping devices of a single one of the sub-sets being activated at the same time.

2. A laser amplifier according to claim 1, comprising two, three or four sub-sets of pumping devices (2) which are activated simultaneously for devices pertaining to one and same sub-set, and activated at different times for devices pertaining to different sub-sets.

3. A laser amplifier according to claim 1 or claim 2, wherein the electrical power supply and control system is adapted to activate firstly the pumping devices (2) of one of the sub-sets (P1) during a first period of operation of the amplifier until a determined level of depletion is reached for the pumping devices of said sub-set, and then to activate the pumping devices (2) of another one of the sub-sets (P2) during a second period of operation of the amplifier.

4. A laser amplifier according to claim 3, adapted to transmit successive laser radiation pulses during each period of operation of the amplifier corresponding to the activation of the pumping devices (2) of one of the sub-sets (P1, P2).

5. A laser amplifier according to claim 1 or claim 2, adapted to transmit successive laser radiation pulses and in which the electrical power supply and control system is adapted to activate alternatively the pumping devices (2) of each sub-set (P1, P2), while swapping a sub-set for another one at each pulse transmitted.

6. A process for amplifying a laser beam comprising the following steps:
- arranging an amplifying medium (1) along a path of the laser beam (L), said medium being bounded by at least two side faces (F1, F2) so that the laser beam is reflected on one and then another one of the faces of the amplifier medium at successive points (A₁, A₂, A₃,...) of said faces;
- arranging a set of pumping devices (2) outside said amplifying medium above some at least of the reflection points of the laser beam (A₁, A₂, A₃,...) along a direction perpendicular to the corresponding faces (F1, F2), for pumping the amplifying medium (1) in zones located around said reflection points;
- connecting the pumping devices (2) while separating said devices into at least two sub-sets (P1, P2) each comprising at least one pair of pumping devices (2) arranged respectively above two successive reflection points (A₁, A₂, A₃, A₄) along the path of the laser beam (L) in the amplifying medium (1); and
- activating simultaneously the pumping devices (2) of a first one of said sub-set of devices (P1, P2) and then the pumping devices of a second one of said sub-sets of devices, that is different from the first sub-set.

7. A process according to claim 6, wherein the pumping devices (2) are separated into two, three or four sub-sets of pumping devices (2) which are activated simultaneously for devices pertaining to one and same sub-set and activated at different times for devices pertaining to different sub-sets.

8. A process according to claim 6 or claim 7 wherein:
- the pumping devices (2) of the first sub-set (P1) are activated firstly during a first period of operation;
- a level of depletion of said pumping devices of said first sub-set is determined after the first period of operation;
- the determined level of depletion is compared to a threshold; and
- if the level of depletion has reached said threshold, the pumping devices (2) of said second sub-set (P2) are activated.

9. A process according to claim 8 wherein the pumping devices (2) of each sub-set (P1, P2) are activated so as to transmit successive laser radiation pulses during each period of operation.

10. A process according to claim 6 or claim 7 wherein the pumping devices (2) of each sub-set (P1, P2) are activated so as to transmit successive laser radiation pulses and wherein the pumping devices of each sub-set are activated alternatively, swapping a sub-set for another one at each pulse transmitted.

11. A process according to any one of claims 6 to 10, implemented onboard a spacecraft.

## Patentansprüche

1. Laser-Verstärker, umfassend:
- ein Verstärkermedium (1), welches durch wenigstens zwei seitliche Flächen (F1, F2) begrenzt und dazu angepasst ist, um von einem zu verstärkenden Laserstrahl (L) gemäß einer vorbestimmten Trajektorie durchquert zu werden, wobei die Trajektorie aufeinander folgende Reflexionspunkte des Laserstrahls (A1, A2, A3, ...) umfasst, die auf der einen und dann auf der anderen der seitlichen Flächen des Verstärkermediums angeordnet sind;
- eine Menge von Pumpvorrichtungen (2), die außerhalb des Verstärkermediums angeordnet sind, über wenigstens einigen der Reflexionspunkte des Laserstrahls (A1, A2, A3, ...) senkrecht in Bezug auf den entsprechenden Seiten (F1, F2), um das Verstärkermedium (1) in Bereichen um die Reflexionspunkte herum zu pumpen, wobei die Menge von Pumpvorrichtungen in wenigstens zwei voneinander getrennte Untermengen (P1,P2) unterteilt ist, und wobei jede Untermenge wenigstens ein Paar von Pumpvorrichtungen (2) umfasst, die jeweils bei zwei aufeinander folgenden Reflexionspunkten (A1, A2, A3, A4, ...) entlang der Trajektorie des Laserstrahls (L) in dem Verstärkermedium (1) angeordnet sind, und
- ein System zu elektrischen Versorgung und Steuerung, welches so angeordnet ist, um simultan die Pumpvorrichtungen (2) einer ersten der Untermengen von Pumpvorrichtungen (P1) und dann die Pumpvorrichtungen (2) einer zweiten der Untermengen von Pumpvorrichtungen (P2) zu aktivieren, welche sich von der ersten Untermenge unterscheidet, wobei die Pumpvorrichtungen einer einzelnen der Untermengen zur gleichen Zeit aktiviert werden.

2. Laser-Verstärker nach Anspruch 1,
umfassend zwei, drei oder vier Untermengen von Pumpvorrichtungen (2), die gleichzeitig für Vorrichtungen aktiviert werden, die zu einer gleichen Untermenge gehören, und die zu unterschiedlichen Zeitpunkten aktiviert werden für Vorrichtungen, die zu unterschiedlichen Untermengen gehören.

3. Laser-Verstärker nach Anspruch 1 oder 2,
wobei das System zur elektrischen Versorgung und Steuerung dazu angepasst ist, zunächst die Pumpvorrichtungen (2) von der einen der Untermengen (P1) während eines ersten Betriebs-Zeitabschnitts des Verstärkers zu aktivieren, bis ein vorbestimmtes Erschöpfungsniveau der Pumpvorrichtungen dieser Untermenge erreicht ist, und um dann die Pumpvorrichtungen (2) einer anderen der Untermengen (P2) während eines zweiten Betriebs-Zeitabschnitts des Verstärkers zu aktivieren.

4. Laser-Verstärker nach Anspruch 3,
angepasst dazu, aufeinander folgende Laserstrahlungspulse während jedem Betriebs-Zeitabschnitt des Verstärkers auszusenden, welcher der Aktivierung der Pumpvorrichtungen (2) von der einen der Untermengen (P1, P2) entspricht.

5. Laser-Verstärker nach Anspruch 1 oder 2,
angepasst dazu, aufeinander folgende Laserstrahlungspulse auszusenden, und wobei das System zur elektrischen Versorgung und Steuerung dazu ausgebildet ist, abwechselnd die Pumpvorrichtungen (2) von jeder Untermenge (P1, P2) zu aktivieren, wobei die Untermenge bei jedem gesendeten Puls gewechselt wird.

6. Verfahren zur Verstärkung eines Laserstrahls, umfassend die folgenden Schritte:
- Anordnen eines Verstärkermediums (1) auf einer Trajektorie des Laserstrahls (L), wobei das Medium durch wenigstens zwei seitliche Flächen (F1, F2) begrenzt wird, so dass der Laserstrahl zuerst an einer, dann an einer anderen der Flächen des Verstärkermediums in aufeinander folgenden Punkten (A1, A2, A3, ...) der Flächen reflektiert wird,
- Anordnen einer Menge von Pumpvorrichtungen (2) außerhalb des Verstärkermediums, über wenigstens einigen der Reflexionspunkte des Laserstrahls (A1, A2, A3, ...) senkrecht in Bezug auf die entsprechenden Flächen (F1, F2), um das Verstärkermedium (1) in Bereichen um die Reflexionspunkte herum zu pumpen;
- Anschließen der Pumpvorrichtungen (2), wobei die Vorrichtungen in wenigstens zwei Untermengen (P1, P2) aufgeteilt werden, welche jede wenigstens ein Paar von Pumpvorrichtungen (2) umfasst, die sich jeweils bei zwei aufeinander folgenden Reflexionspunkten (A1, A2, A3, A4) entlang der Trajektorie des Laserstrahls (L) in dem Verstärkermedium (1) befinden; und
- simultanes Aktivieren der Pumpvorrichtungen (2) einer ersten der Untermengen von Vorrichtungen (P1, P2), und dann der Pumpvorrichtungen einer zweiten der Untermengen von Vorrichtungen, verschieden von der ersten Untermenge.

7. Verfahren nach Anspruch 6,
wobei die Pumpvorrichtungen (2) in zwei, drei oder vier Untermengen von Pumpvorrichtungen (2) aufgeteilt werden, welche für Vorrichtungen, die zu einer gleichen Untermenge gehören, gleichzeitig aktiviert werden und für Vorrichtungen, die zu verschiedenen Untermengen gehören, zu verschiedenen Zeitpunkten aktiviert werden.

8. Verfahren nach Anspruch 6 oder 7, wobei
- zunächst die Pumpvorrichtungen (2) der ersten Untermenge (P1) während eines ersten Betriebs-Zeitabschnitts aktiviert werden,
- ein Erschöpfungsniveau der Pumpvorrichtungen der ersten Untermenge nach dem ersten Betriebs-Zeitabschnitt bestimmt wird,
- das Erschöpfungsniveau mit einem Schwellwert verglichen wird, und
- dann, wenn das Erschöpfungsniveau den Schwellwert erreicht hat, die Pumpvorrichtungen (2) der zweiten Untermenge (P2) aktiviert werden.

9. Verfahren nach Anspruch 8,
wobei die Pumpvorrichtungen (2) von jeder Untermenge (P1, P2) so aktiviert werden, dass sie aufeinander folgende Laserstrahlungspulse während jedem Betriebs-Zeitabschnitt aussenden.

10. Verfahren nach Anspruch 6 oder 7,
wobei die Pumpvorrichtungen (2) von jeder Untermenge (P1, P2) so aktiviert werden, dass sie aufeinander folgende Laserstrahlungspulse aussenden, und wobei die Pumpvorrichtungen von jeder Untermenge abwechselnd aktiviert werden, wobei bei jedem ausgesendeten Puls die Untermenge gewechselt wird.

11. Verfahren nach einem der Ansprüche 6 bis 10, welches an Bord eines Raumfahrzeugs durchgeführt wird.
